Europäisches Patentamt

(19) European Patent Office

Office européen des brevets

(11) Publication number: **0 070 045**
A2

## (12) EUROPEAN PATENT APPLICATION

(21) Application number: 82200419.8

(22) Date of filing: 02.04.82

(51) Int. Cl.³: **B 60 G 17/04**

(30) Priority: 09.07.81 BE 2059254

(43) Date of publication of application:
19.01.83 Bulletin 83/3

(84) Designated Contracting States:
AT CH DE FR GB IT LI NL SE

(71) Applicant: Van Hool, naamloze vennootschap
Bernard Van Hoolstraat 58
B-2578 Lier(BE)

(72) Inventor: Geerts, Jozef L.
Hoogboomsteenweg 104
B-2070 Ekeren(BE)

(72) Inventor: de Wit, Leon C.
Papenaardekenstraat 196
B-2120 Schoten(BE)

(74) Representative: Donné, Eddy
M.F.J.Bockstael Arenbergstraat 13
B-2000 Anvers(BE)

(54) Improved pneumatic suspension for vehicles.

(57) Improved pneumatic suspension, of the type consisting of air bellows which ensure the assembly between the axles of the vehicle and frame or body of same, whereby the bellows are fed from an air reservoir via height regulating valves coupled with valves expelling the air, characterized in that the aforesaid pneumatic suspension is equipped with at least one angle measuring device (11) which is coupled with the aforesaid air expelling valves (9) so that from a definite lateral inclination angle of the vehicle, the air bellow or bellows (1-4) are freed from air at the high side of the vehicle.

EP 0 070 045 A2

./...

Croydon Printing Company Ltd.

Fig.1

- 1 -

"Improved pneumatic suspension for vehicles".

The present invention relates to an improved pneumatic suspension for vehicles as buses, trucks and the like.

Pneumatic suspensions are known since a certain time; they substantially consist of air bellows which ensure the elastic assembly between the axles and frame or body of the vehicle. These air bellows are fed from an air reservoir via height regulating valves which are responsive to the load. Suchlike pneumatic suspensions may or may not be combined with a conventional steel suspension and/or be equipped with a kneeling system (suspension with adjustable height). They provide for an excellent comfort, this being the reason why they are more and more being used on vehicles for public transport, removal vehicles and suchlike vehicles.

For vehicles with pneumatic suspension and high gravity centre, for instance for modern buses, there is a problem of turn over stability, particularly in extreme situations or during the static turn over tests which are imposed by various countries (amongst others, tilt test in England and in Japan).

The object of the present invention is to improve the safety of the vehicles concerned, through increasing the stability.

According to the invention, this object is achieved by equipping a suspension of the type mentioned hereinabove with at least one angle-measuring device which is coupled with valves expelling the air so that, starting from a certain lateral inclination of the frame or body of the vehicle in relation to the horizontal, the air bellow or bellows at the high side of the vehicle are being freed from air.

For the sake of clearness the invention is described below by means of a not limitative embodiment, reference being made to the annexed drawings. Therein,

Figure 1 shows a diagram of an example of application of an improved pneumatic suspension according to the invention;

Figure 2 shows a front view of an angle measuring device; and

Figure 3 shows a side view of a device according to Figure 2.

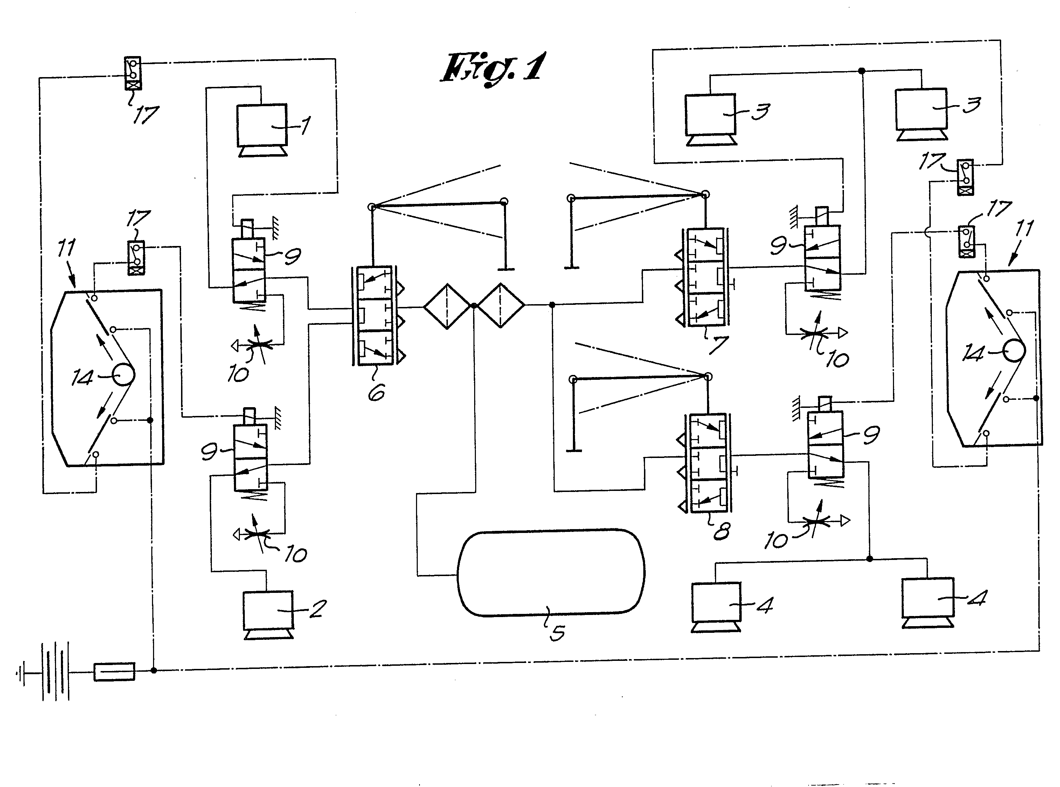

The pneumatic suspension according to Figure 1 mainly comprises tow air bellows 1 and 2 on the front axle and two pairs of air bellows 3 and 4 on the driving axle of the vehicle. These air bellows are fed from an air reservoir 5, via one height regulating valve 6, which is responsive to the load for the fore axel, and two similar valves, 7 and 8 respectively, for the driving axle.

Between each of the valves 6 through 8 and the bellow or bellows connected therewith there is provided for a valve expelling the air 9 with a delivery regulator 10.

Two angle measuring devices 11 are fixed either on the frame or body of the vehicle nearby the ends thereof, or on the axles or axle beams.

These devices 11 are intended for detecting the attainment and abandonment of a pre-selected inclination angle. In the proposed embodiment they comprise a carrier 12 in which a small V-shape pipe 13 is fixed. This small pipe 13 is filled with oil or with another fluid and contains a metallic ball 14. On both ends of the small pipe 13 are mounted proximity switches 15 and 16, of the type with a transistor-oscillator, or other switches of the electric, pneumatic or mechanical type.

The signals which are produced by the switches 15 and 16 are introduced as inputs into a time-circuit 17, which transmits only the signals that are of a longer duration than a pre-adjustable time, whereby transitory signals are neutralized.

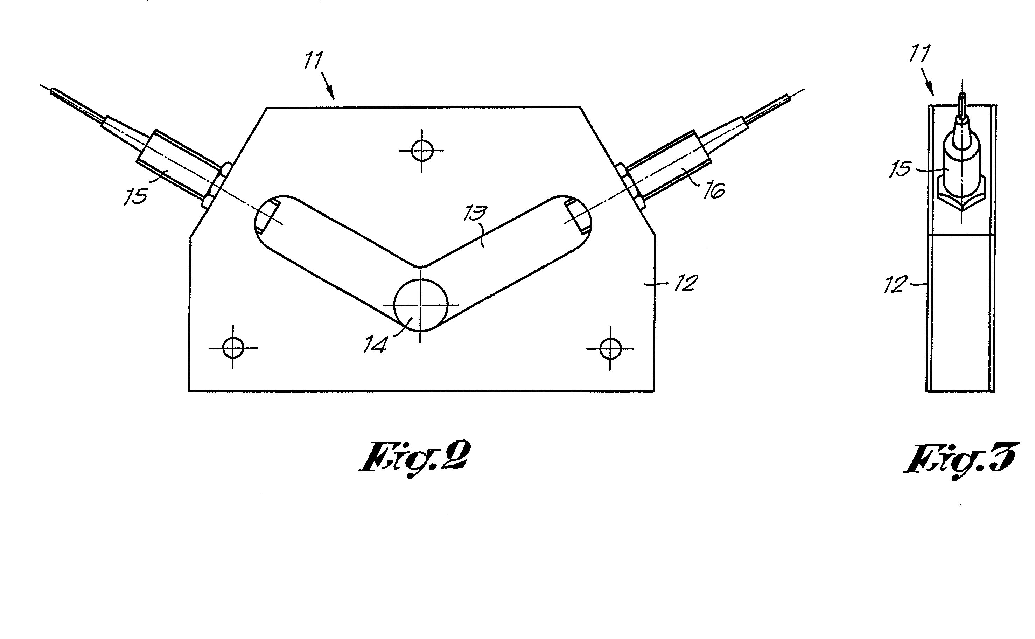

The angle (Figure 2) and time-retardation of the circuits 17 are selected taking into account the characteristics of the vehicle which is to be equipped.

The output of the connections 17 is used to control the air expelling valve 9. When a device 11 transmits a signal which has a longer duration than de retardation of the corresponding time circuit, the valve 9 connected therewith is controlled in such a way that the pressure line to the bellow or bellows controlled hereby becomes interrupted and the air can escape from the same bellow (bellows). If the aforesaid signal stops, the valve concerned returns to its original position, whereby the corresponding height regulating valve 7 can work normally again.

Taking into account the characteristics of the vehicle and of the pneumatic suspension, the dimensions of the pneumatic circuit are selected so that the expelling of air from the bellow (or bellows) takes place very rapidly, but without shocks.

It goes without saying that many changes can be made to the embodiment described hereinabove without going outside the scope of the invention.

A device according to the invention can also be adapted for absorbing rolling and centrifugal motions of a running vehicle.

Claims.

1.- Improved pneumatic suspension for vehicles, of the type consisting of air bellows ensuring the assembly between the axles of the vehicle and frame or body thereof, whereby these bellows are fed from an air reservoir via height regulating valves, which are responsive to the load, connected with valves expelling the air, characterized in that the aforesaid suspension is equipped with at least one angle measuring device (11), which is connected with the aforesaid valves expelling the air (9) in such a way that starting at a definite lateral inclination angle of the frame and/or body of the vehicle in relation to the horizontal, the air bellow or bellows (1-4) at the high side of the vehicle become freed of air.

2.- Improved pneumatic suspension according to claim 1, characterized in that two or more angle measuring devices (11) are provided for, which are fixed at the level of or on an axle of the vehicle.

3.- Improved pneumatic suspension according to claim 1, characterized in that between the angle measuring device (11) and air expelling valve (9) controlled by same, a time circuit (17) is connected.

**Fig. 1**

0070045

Fig.3

Fig.2